# EUROPEAN PATENT APPLICATION

(11) **EP 4 498 166 A1**
(43) Date of publication of application: **29.01.2025**
(21) Application number: 24184207.9
(22) Date of filing: 25.06.2024
(51) Int. Cl.: G03G 15/02, G03G 15/20

(54) **ELECTROPHOTOGRAPHIC MEMBER, FIXING APPARATUS, AND ELECTROPHOTOGRAPHIC IMAGE FORMING APPARATUS**

(30) Priority: 27.06.2023 JP 2023104725; 29.11.2023 JP 2023201842
(71) Applicant: CANON KABUSHIKI KAISHA, Tokyo 146-8501 (JP)
(72) Inventor: ISHIFUJI, Ryo, Tokyo, 146-8501 (JP); MURAMATSU, Hiroki, Tokyo, 146-8501 (JP); YAMASHITA, Takashi, Tokyo, 146-8501 (JP)
(74) Representative: TBK

(57) **Abstract**

An electrophotographic member including at least a base layer, an elastic layer, and a surface layer comprising a fluorocarbon resin in this order, wherein the elastic layer has a surface resistivity of 1 × 10¹⁴ Ω/□ or more, the surface layer has a surface resistivity of 1 × 10¹⁵ Ω/□ or more, the electrophotographic member further has a resin layer between the elastic layer and the surface layer, the resin layer includes an ionic conducting agent, and the resin layer has a surface resistivity of 1 × 10¹⁴ Ω/□ or more.

## Description

### BACKGROUND OF THE INVENTION

### Field of the Invention

The present disclosure relates to an electrophotographic member for use in a fixing apparatus, or the like of an electrophotographic image forming apparatus, and a fixing apparatus including the electrophotographic member, and an electrophotographic image forming apparatus.

### Description of the Related Art

The fixing members for use in a fixing apparatus of an electrophotographic image forming apparatus such as a printer, a copier, or a facsimile include film shaped or roller shaped ones. The fixing members include a fixing member having a base material of a film of a heat-resistant resin or the metal, or a heat-resistant resin or metal having a roller shape, an elastic layer on the base material, and a release layer on the elastic layer. Herein, the release layer is often allowed to include a fluorocarbon resin having excellent releasability with respect to a toner.

A fluorocarbon resin tends to be most negatively charged in the triboelectric charging series. For this reason, in the process of forming an electrophotographic image, when the outer surface of the fixing member, namely, the outer surface of the release layer is rubbed with paper or a pressurizing member, the release layer of the fixing member is charged. This may result in the occurrence of electrostatic offset in which an unfixed toner is electrostatically deposited on the release layer of the fixing member.

Japanese Patent Application Publication No. H08-220907 discloses a fixing apparatus including a fixing member, the surface material of the fixing member to come in contact with a toner image including at least a fluorocarbon resin, and an ion conductive electric resistance value controlling material having a melting point equal to or higher than the highest operating temperature of the fixing apparatus. Then, it is disclosed that such a fixing apparatus can prevent the occurrence of the electrostatic offset.

### SUMMARY OF THE INVENTION

At least one aspect of the present disclosure is targeted for providing an electrophotographic member capable of stable exhibition of the effect of preventing the electrostatic offset. Further, at least another aspect of the present disclosure is targeted for providing a fixing apparatus contributing to the stable formation of a high quality electrophotographic image. Still further, at least still other aspect of the present disclosure is targeted for providing an electrophotographic image forming apparatus capable of forming a high quality electrophotographic image.

According to at least one aspect of the present disclosure, there is provided an electrophotographic member as specified in claims 1 to 12.

According to at least one aspect of the present disclosure, there is provided a fixing apparatus as specified in claim 13.

According to at least one aspect of the present disclosure, there is provided an electrophotographic image forming apparatus as specified in claim 14.

According to at least one aspect of the present disclosure, there is provided an fixing member capable of stable exhibition of the effect of preventing the electrostatic offset. Further, at one aspect of the present disclosure, there is provided a fixing apparatus contributing to the stable formation of a high quality electrophotographic image. Still further, at least one aspect of the present disclosure, there is provided an electrophotographic image forming apparatus capable of forming a high quality electrophotographic image.

Further features of the present invention will become apparent from the following description of exemplary embodiments with reference to the attached drawings.

### BRIEF DESCRIPTION OF THE DRAWINGS

FIG. 1 is a schematic view of an image forming apparatus in accordance with one aspect of the present disclosure;
FIG. 2 is a schematic view of a fixing apparatus in accordance with one aspect of the present disclosure;
FIG. 3 is a cross sectional view of a fixing belt in accordance with one aspect of the present disclosure;
FIG. 4 is an explanatory view of a charging potential measuring device; and
FIG. 5 is an explanatory view of the effect of preventing the electrostatic offset exerted by an electrophotographic member in accordance with one aspect of the present disclosure.

### DESCRIPTION OF THE EMBODIMENTS

In the present disclosure, the descriptions of "XX or more and YY or less" or "XX to YY" representing numerical ranges mean numerical ranges including the lower and upper limits, which are endpoints, unless otherwise specified. When numerical ranges are stated stepwise, the upper and lower limits of each numerical range can be combined arbitrarily. In addition, in the present disclosure, wording such as "at least one selected from the group consisting of XX, YY and ZZ" means any of: XX; YY; ZZ; a combination of XX and YY; a combination of XX and ZZ; a combination of YY and ZZ; or a combination of XX and YY and ZZ. Further, in the present disclosure, "Ω/□" is the unit of the surface resistivity specified in the Japanese Industrial Standards (JIS) K 6911: 2006, and is synonymous with "Q/square".

The reference numerals in respective drawings are as follows.
10: image forming part, 11: photosensitive drum, 12: charging device, 13: laser scanner, 14: developing device, 15: cleaner, 17: primary transfer blade, 20: paper feed cassette, 25: multi paper feed tray, 23: resist roller pair, 31: intermediate transfer belt,35: secondary transfer roller, 40: fixing unit, 41: fixing belt, 41a: surface layer, 41b: adhesion layer (resin layer), 41c: elastic layer, 41d: base layer, 43: heating body, 44: pressure roller, 45: contact type thermistor, 46: heater holder, 501: corona discharger grid, 502: fixing member, 503: probe of surface electrometer, P: recording material, T: toner.

The present inventors conducted a study on a fixing member in accordance with Japanese Patent Application Publication No. H08-220907. As a result, the effect of preventing electrostatic offset might not have been able to be sufficiently obtained. The reason for this is considered due to the following. The electrostatic offset prevention effect of the fixing member in accordance with Japanese Patent Application Publication No. H08-220907 depends upon the ionic conducting agent in the surface layer of the fixing member; for this reason, bleeding of the ionic conducting agent on the surface of the surface layer results in the reduction or the loss of the amount of the ionic conducting agent in the surface layer. Under such circumstances, the present inventors conducted a close study for obtaining a fixing member capable of preventing the electrostatic offset with stability by other methods than the method for allowing the surface layer to include an ionic conducting agent. As a result, the present inventors found that the fixing member having the following configuration can prevent electrostatic offset even when the surface layer is not allowed to include an ionic conducting agent.

### Configuration

An electrophotographic member comprising at least a base layer, an elastic layer, and a surface layer comprising a fluorocarbon resin in this order, wherein
the elastic layer has a surface resistivity of 1 × 10¹⁴ Ω/□ or more,
the surface layer has a surface resistivity of 1 × 10¹⁵ Ω/□ or more,
the electrophotographic member further has a resin layer between the elastic layer and the surface layer,
the resin layer comprises an ionic conducting agent, and
the resin layer has a surface resistivity of 1 × 10¹⁴ Ω/□ or more.

With reference to the accompanying drawings, a description will be given to a fixing member and an image forming apparatus in accordance with one embodiment of the present disclosure. The fixing member in accordance with the present disclosure is not limited to the configuration embodied in the embodiment, however.

### Fixing member

An electrophotographic member in accordance with one aspect of the present disclosure can be, for example, a fixing rotating member such as a fixing roller or a fixing belt (fixing film). Below, a description will be given by taking an electrophotographic member including a fixing member having an endless shape (which will be hereinafter also referred to simply as an "electrophotographic belt") as an example.

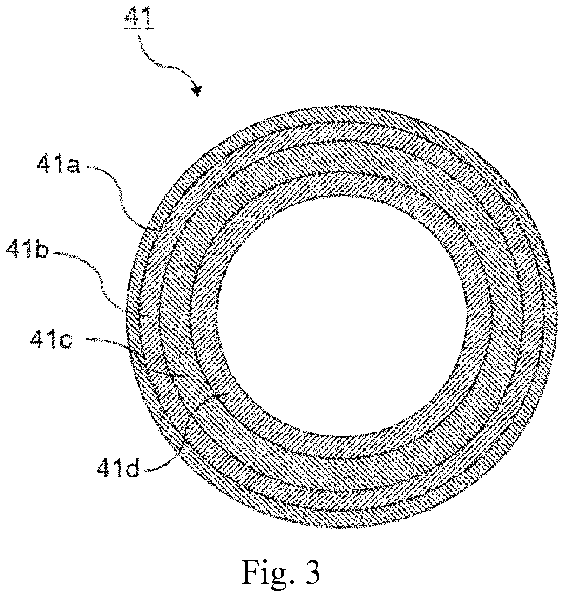

A fixing belt 41 in accordance with the present aspect shown in FIG. 3 has a base layer 41d, an elastic layer 41c coating the outer surface thereof, and a surface layer 41a coating the surface opposite to the side of the elastic layer 41c opposed to the base layer 41d. The surface layer 41a configures the outer surface of the electrophotographic member, and can be a release layer having releasability with respect to, for example, a toner. Further, the fixing belt 41 has a resin layer 41b as an adhesion layer on the surface of the elastic layer 41c opposite to the side thereof opposed to the base layer 41d, namely, between the surface layer 41a and the elastic layer 41c. Then, the resin layer 41b includes an ionic conducting agent. Herein, the resin layer 41b may be a monolayer, or may be a laminated body of a plurality of layers. However, from the viewpoint of allowing exhibition of the charge neutralization effect by the resin layer 41b described later with more reliability, the resin layer 41b is preferably a monolayer. Incidentally, when the resin layer 41b is a laminated body of a plurality of layers, the laminated body may include an adhesion layer, and other layers, and the ionic conducting agent may only include at least one layer of the plurality of layers configuring the laminated body.

The present inventors presume that the reason why the electrophotographic member in accordance with the present disclosure can prevent the electrostatic offset despite the fact that the electrophotographic member has a lamination structure of the surface layer 41a with a high surface resistivity and the elastic layer 41c with a high surface resistivity is as follows.

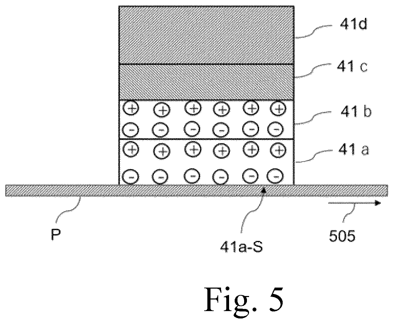

It is considered as follows. As shown in FIG. 5, in the fixing step of an electrophotographic image, when the outer surface of the surface layer 41a is rubbed by the movement of the recording material P in the direction of an arrow 505, the vicinity of a surface 41a-S of the surface layer 41a in contact with the recording material P is negatively charged, and the surface side of the surface layer 41a opposed to the surface 41a-S is positively charged. Then, in response to the polarization in the surface layer 41a, anions of the ionic conducting agent in the resin layer 41b move to the side closer to the surface layer 41a, and cations move to the side of the resin layer 41b away from the surface layer 41a. As a result, the negative electric charges generated on the surface 41a-S side of the surface layer 41a are relaxed by the cations polarized in the resin layer 41b. Accordingly, the electric charges are neutralized throughout the electrophotographic member.

It can be considered that the correctness of the mechanism of the electric charge neutralization is also apparent from the following experimental results. The present inventors prepared the following electrophotographic belt as the electrophotographic belt in accordance with the present disclosure. The electrophotographic belt had a lamination structure of a base layer 41d, an elastic layer 41c on the base layer 41d, a resin layer including an ionic conducting agent (adhesion layer) 41b, and a surface layer 41a. The surface resistivity of the elastic layer 41c was set at 1 × 10¹⁴ Ω/□, the surface resistivity of the surface layer 41a was set at 1 × 10¹⁵ Ω/□, and the surface resistivity of the resin layer 41b was set at 1 × 10¹⁴ Ω/□.

After eliminating electrostatic charges of the outer surface 41a-S of the electrophotographic belt, the grid part of the corona discharger was arranged with a gap of 10 mm left from the outer surface, and the corona discharger was applied with an application voltage of -5 kV for 15 seconds. The potential of the outer surface was measured at intervals of 0.1 second, starting from the point where the application of voltage to the corona discharger stopped (0 second). As a result, the highest potential was -620 V at 10 seconds after stop of the discharge.

On the other hand, the same measurement was performed on the electrophotographic belt as a control example in which the resin layer 41b was not allowed to include an ionic conducting agent. As a result, at the electrophotographic belt as a control example, the highest potential was -750 V at 10 seconds after stop of discharge.

Namely, it was found as follows. For the electrophotographic belt in accordance with the present disclosure, despite the fact that the surface layer and the elastic layer were insulative, the outer surface 41a-S of the surface layer became less likely to be charged. From this, it can be considered that the effect of preventing the electrostatic offset produced by the fixing member in accordance with the present disclosure is obtained not by releasing the electric charges of the surface layer, but by electric charge neutralization (electric charge relaxation).

Further, for the electrophotographic belt in accordance with the present disclosure, as described above, the electric charge neutralization effect resulting from the inclusion of the ionic conducting agent in the adhesion layer is used. For this reason, the ionic conducting agent is less likely to bleed to the surface 41a-S of the surface layer 41a. For this reason, the amount of the ionic conducting agent in the adhesion layer is less likely to fluctuate, so that the effect of preventing the electrostatic offset can be obtained with stability.

Below, each layer will be described specifically.

### Base Layer

As the material for the base layer 41d, the known one as the electrophotographic member may be used, and there is no particular restriction. For example, a metal such as aluminum, iron, stainless steel (SUS), or nickel, and an alloy thereof, and a heat-resistant resin such as polyimide are used. Stainless steel is preferable. Although the thickness of the base layer 41d has no particular restriction, it is preferably set at from 20 µm to 100 µm, and more preferably set at from 20 µm to 50 µm from the viewpoint of, for example, the strength, the flexibility, and the heat capacity.

The outer surface of the base layer 41d may be subjected to a surface treatment in order to be imparted with the adhesion with the elastic layer 41c. For the surface treatment, physical treatments such as a blast treatment, a lapping treatment, and polishing, and chemical treatments such as an oxidation treatment, a coupling agent treatment, and a primer treatment can be used alone, or in combination of a plurality thereof.

When the surface of the base layer 41d is provided with the elastic layer 41c including silicone rubber, in order to improve the adhesion between the base layer 41d and the elastic layer 41c, the surface of the base layer 41d is preferably subjected to a primer treatment. Examples of the primer for use in the primer treatment may include a paint obtained by appropriately mixing and dispersing a silane coupling agent, a silicone polymer, hydrogenated methyl siloxane, alkoxy silane, a reaction promoting catalyst, and a colorant such as red iron oxide in an organic solvent.

The primer can be appropriately selected according to the material for the base layer 41d, the kind of the elastic layer 41c, or the form of the crosslinking reaction. Particularly, when the elastic layer 41c includes an unsaturated aliphatic group such as vinyl group in a large amount, a primer including a hydrosilyl group is preferably used in order to impart the adhesion by the reaction with an unsaturated aliphatic group. When the elastic layer 41c includes a hydrosilyl group in a large amount, a primer including an unsaturated aliphatic group such as vinyl group is preferably used.

As the primers, other than these, mention may be made of those including an alkoxy group. As the primer, a commercially available product can be used. Further, the primer treatment includes a step of coating the primer onto the outer surface of the base layer 41d (the adhesion surface with the elastic layer 41c), and performing drying or burning.

### Elastic layer

The surface resistivity of the elastic layer 41c is 1 × 10¹⁴ Ω/□ or more. When the elastic layer 41c includes the filler, it is assumed that the surface resistivity of the elastic layer 41c is 1 × 10¹⁴ Ωcm or more. When the surface resistivity became less than 1 × 10¹⁴ Ωcm due to the inclusion of the filler in the elastic layer 41c, current leakage caused by aggregation of the filler may be generated, resulting in the generation of a defect in an electrophotographic image. The surface resistivity of the elastic layer 41c is preferably, for example, 1 × 10¹¹ to 1 × 10¹⁶ Ω/□.

The thickness of the elastic layer 41c can be appropriately designed, for example, in consideration of the hardness of the surface of the electrophotographic member, and the width of the nip part formed of the electrophotographic member and a member arranged opposed to the electrophotographic member. When the electrophotographic member is used as the fixing member, the thickness of the elastic layer 41c is preferably from 100 µm to 3000 µm, and more preferably from 200 µm to 400 µm. By setting the thickness of the elastic layer 41c within the foregoing range, it is possible to ensure the fixing nip part with a sufficient width when the electrophotographic member is incorporated into the fixing apparatus as the fixing member. Further, by setting the thickness of the elastic layer 41c at 100 µm or more, it is possible to allow the outer surface of the electrophotographic member to better follow the unevenness of the paper surface. As a result of this, it becomes easier to more improve the further fixing performance thermal conductivity of an unfixed toner image to a paper sheet.

For the elastic layer 41c, a known electrophotographic member may be used, and there is no particular restriction. The elastic layer 41c preferably includes silicone rubber excellent in heat resistance. Further, as the raw material for the silicone rubber, an addition curable liquid silicone rubber mixture is preferably used. Namely, the elastic layer 41c preferably includes a cured product of an addition curable liquid silicone rubber mixture. Such an elastic layer 41c can be formed by, for example, forming a coating film of an addition curable liquid silicone rubber mixture on the outer surface of the base layer 41d, and heating and curing the coating film.

One aspect of the addition curable liquid silicone rubber mixture usable for forming the elastic layer 41c will be described in details below.

The addition curable liquid silicone rubber mixture includes at least the following components (a) to (c), and includes the following component (d) as a given component:
component (a): organopolysiloxane having an unsaturated aliphatic group;
component (b): organopolysiloxane having active hydrogen bonded with silicon;
component (c): a catalyst; and
component (d): a filler.

Each component will be described below.

### Component (a)

An organopolysiloxane having an unsaturated aliphatic group is an organopolysiloxane having an unsaturated aliphatic group such as a vinyl group, and examples thereof include those represented by the following formulas (1) and (2). The organopolysiloxane having an unsaturated aliphatic group is preferably linear.

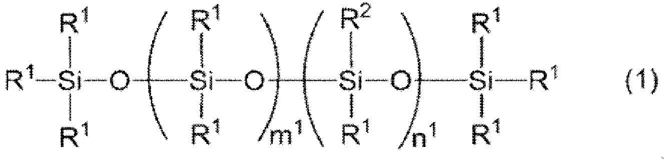

In structural formula (1), m¹ represents an integer of 0 or more, and n¹ represents an integer of 3 or more. Further, in structural formula (1), each R¹ independently represents a monovalent unsubstituted or substituted hydrocarbon group containing no unsaturated aliphatic group, provided that at least one of R¹ represents a methyl group and each R² independently represents an unsaturated aliphatic group.

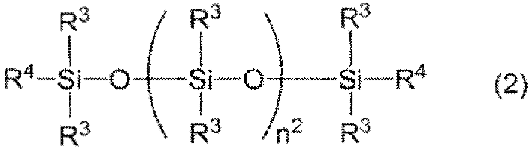

In structural formula (2), n² represents a positive integer, and each R³ independently represents a monovalent unsubstituted or substituted hydrocarbon group containing no unsaturated aliphatic group, provided that at least one of R³ represents a methyl group, and each R⁴ independently represents an unsaturated aliphatic group.

In structural formulas (1) and (2), examples of the monovalent unsubstituted or substituted hydrocarbon group containing no unsaturated aliphatic group, which can be represented by R¹ and R³, include the following groups.

### - Unsubstituted hydrocarbon group

Alkyl group (for example, methyl group, ethyl group, propyl group, butyl group, pentyl group, and hexyl group).

Aryl group (for example, phenyl group).

### - Substituted hydrocarbon group

Substituted alkyl group (for example, chloromethyl group, 3-chloropropyl group, 3,3,3-trifluoropropyl group, 3-cyanopropyl group, and 3-methoxypropyl group).

The organopolysiloxanes represented by structural formulas (1) and (2) have at least one methyl group directly bonded to the silicon atom forming the chain structure. However, 50% or more of each of R¹ and R³ are preferably methyl groups, and more preferably all R¹ and R³ are methyl groups, for ease of synthesis and handling.

Also, examples of unsaturated aliphatic groups that can be represented by R² and R⁴ in structural formulas (1) and (2) include the following groups. Examples of unsaturated aliphatic groups include a vinyl group, an allyl group, a 3-butenyl group, a 4-pentenyl group, and a 5-hexenyl group. Among these groups, both R² and R⁴ are preferably vinyl groups because synthesis and handling are facilitated, cost is reduced, and a cross-linking reaction can be easily performed.

The component (a) preferably has a viscosity of from 1000 mm²/s to 50000 mm²/s from the viewpoint of the moldability. When the viscosity of the component (a) is 1000 mm²/s or more, it becomes easier to adjust the viscosity necessary for forming the addition curable liquid silicone rubber mixture into an elastic layer 41c. Whereas, when the viscosity is 50000 mm²/s or less, it is possible to prevent an excessive increase in viscosity of the mixture with more reliability. The viscosity (kinematic viscosity) is on the basis of JIS Z 8803 : 2011, and the measurement can be performed using a capillary viscometer, a rotary viscometer, or the like.

The blending amount of component (a) is preferably 55% by volume or more from the viewpoint of durability and 65% by volume or less from the viewpoint of heat transfer, based on the liquid silicone rubber mixture used to form the elastic layer 20c.

### Component (b)

Organopolysiloxane having active hydrogen bonded with a silicon atom, namely, organopolysiloxane having a Si-H bond functions as a crosslinking agent for reacting (undergoing a hydrosilylation reaction) with an unsaturated aliphatic group of the component (a) by the action of a catalyst, and forming crosslinked silicone rubber.

Any organopolysiloxane having a Si-H bond can be used as the component (b). In particular, from the viewpoint of reactivity with the unsaturated aliphatic group of component (a), an organopolysiloxane having an average number of silicon-bonded hydrogen atoms of 3 or more per molecule is preferably used.

Specific examples of component (b) include linear organopolysiloxane represented by structural formula (3) below and cyclic organopolysiloxane represented by structural formula (4) below.

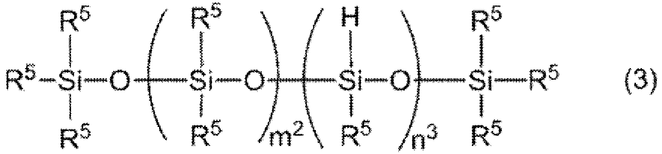

In structural formula (3), m² represents an integer of 0 or more, n³ represents an integer of 3 or more, and R⁵ each independently represents a monovalent unsubstituted or substituted hydrocarbon group containing no unsaturated aliphatic group.

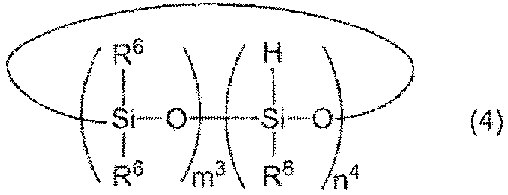

In structural formula (4), m³ represents an integer of 0 or more, n⁴ represents an integer of 3 or more, and R⁶ each independently represents a monovalent unsubstituted or substituted hydrocarbon group containing no unsaturated aliphatic group.

Examples of monovalent unsubstituted or substituted hydrocarbon groups containing no unsaturated aliphatic group that can be represented by R⁵ and R⁶ in structural formulas (3) and (4) include the same groups as those mentioned above for R¹ in structural formula (1). Among these, it is preferable that 50% or more of each of R⁵ and R⁶ be a methyl group and more preferably all R⁵ and R⁶ are methyl groups because synthesis and handling are easy and excellent heat resistance is easily obtained.

### Component (c)

Examples of the catalyst used to form the silicone rubber include a hydrosilylation catalyst for accelerating the hydrosilylation reaction. Known substances such as platinum compounds and rhodium compounds can be used as hydrosilylation catalysts. The blending amount of the catalyst can be appropriately set and is not particularly limited.

### Component (d)

The elastic layer 41c may include a filler. The filler can control, for example, the thermal conductivity, the heat resistance, and the elastic modulus of the elastic layer 41c.

For example, in order to impart the elastic layer 41c with high thermal conductivity, a thermally conductive filler is preferably included therein as the constituent component (d) of the addition curable liquid silicone rubber mixture. Examples of the thermally conductive filler may include a metal, a metal compound, and a carbon fiber. More specifically, for example, mention may be made of fillers including the following materials.

Metal silicon (Si), silicon carbide (SiC), silicon nitride (Si₃N₄), boron nitride (BN), aluminum nitride (AlN), alumina (Al₂O₃), iron oxide (Fe₂O₃), zinc oxide (ZnO), magnesium oxide (MgO), titanium oxide (TiO₂), silica (SiO₂), copper (Cu), aluminum (Al), silver (Ag), iron (Fe), nickel (Ni), carbon black (C), a carbon nanotube (C), a gas phase growth method carbon fiber, a PAN type (polyacrylonitrile) carbon fiber, and a pitch type carbon fiber.

As other constituent components which may be included in the addition curable liquid silicone rubber mixture, for example, mention may be made of a reaction control agent (inhibitor) referred to as an inhibitor for controlling the start time of the hydrosilylation reaction. Examples of such a reaction control agent may include methyl vinyl tetrasiloxane, acetylene alcohols, siloxane-modified acetylene alcohol, and hydroperoxide.

The addition curable liquid silicone rubber composition including the components (a) to (c) can be obtained by, for example, mixing a solution A and a solution B of "DOWSIL SE1886" (trade name, manufactured by DOW and TORAY Co.) commercially available as a two-component type addition reaction curable silicone gel.

The surface of the elastic layer 41c is preferably subjected to an ultraviolet ray treatment. This can prevent the impregnation of the elastic layer 41c with a material for forming a resin layer (adhesion layer) described later, thereby to suppress an increase in hardness of the elastic layer 41c. The ultraviolet ray treatment may be performed with a known method. For example, mention may be made of an accumulated light quantity of preferably 500 to 2000 mJ/cm², and more preferably 600 to 1500 mJ/cm².

### Resin layer (adhesion layer)

The resin layer 41b includes an ionic conducting agent, and has a surface resistivity of 1 × 10¹⁴ Ω/□ or more. The resin layer 41b can be, for example, a mixture of an addition curable silicone rubber adhesive and an ionic conducting agent.

As described previously, the elastic layer 41c preferably includes a cured product of an addition curable liquid silicone rubber mixture. In that case, the resin layer preferably includes a cured product of an addition curable silicone rubber adhesive. The addition curable silicone rubber adhesive has an uncrosslinked component of silicone rubber, and can bind the inside of the surface layer and the uncrosslinked component of the elastic layer by heating. Accordingly, the resin layer 41b is preferably a cured product of an addition curable silicone rubber adhesive including an ionic conducting agent. As the addition curable silicone rubber adhesive, a commercially available product can be used. Examples thereof may include a two-component type "DOWSIL SE1819CV" (trade name, manufactured by DOW and TORAY Co.).

The surface resistivity of the resin layer 41b is 1 × 10¹⁴ Ω/□ or more. The upper limit of the surface resistivity of the resin layer 41b has no particular restriction, and is preferably set at, for example, 1.0 × 10¹⁶ Ω/□ or less. The surface resistivity of the resin layer 41b is preferably, for example, 1 × 10¹⁶ to 1 × 10¹⁶ Ω/□. By setting the surface resistivity of the resin layer 41b at 1 × 10¹⁴ Ω/□ or more, it is possible to cause the polarization state adapted to charging of the surface 41a-S of the surface layer 41a in the resin layer 41b more effectively.

As the ionic conducting agent, an ionic conducting agent including a combination of a known anion and a known cation can be used. For example, the ionic conducting agent has no particular restriction, and a known ionic conducting agent can be used. Below, the cation and the anion configuring the ionic conducting agent will be described in details.

### Cation

As the cation, for example, at least one cation selected from the group consisting of a quaternary ammonium cation such as tributylmethyl ammonium, an imidazolium cation, a pyridinium cation, and an anion having a siloxane bond in the molecule can be used.

Herein, when an addition curable silicone rubber adhesive is used as at least a part of the raw materials for the resin layer as described previously, a cation having a siloxane bond in the molecule is preferable as a cation. The cation having a siloxane bond in the molecule has high affinity with the organopolysiloxane component included in the addition curable silicone rubber adhesive. For this reason, cations can be allowed to present uniformly in the resin layer. As a result, the electric charge neutralization effect can be allowed to be exhibited better.

### Anion

Examples of the anion may include at least one anion selected from the group consisting of a perchloric acid anion, fluorosulfonylimide anion (FSI), bis(trifluoromethanesulfonyl)imide (TFSI), trifluoromethanesulfonate anion ,bis(trifluoromethylsulfonyl)amide, a tetrafluoroborate anion, a hexafluorophosphoric acid anion, and the like.

Of the anions, TFSI and FSI are preferably used. TFSI has a trifluoromethyl group (CF₃) in the molecule. For this reason, TFSI is large in degree of polarization and is advantageous in exhibiting the electric charge neutralization effect.

Further, when as at least a part of the raw materials for the resin layer, an addition curable silicone rubber adhesive is used, TFSI exhibits high hydrophobicity due to the presence of a trifluoromethyl group. Further, the organopolysiloxane in the addition curable silicone rubber adhesive also exhibits high hydrophobicity. For this reason, the affinity between TFSI and the addition curable silicone rubber adhesive is high. As a result, TFSI can be allowed to be present more uniformly in the resin layer. This is considered to be able to function more effectively for the exhibition of the electric charge neutralization effect.

On the other hand, FSI is weaker in degree of polarization as compared with TFSI. However, FSI has a smaller molecule size than that of TFSI, and hence is considered to be high in mobility in the resin layer. This is considered to be able to consequently function for the exhibition of the electric charge neutralization effect more effectively.

Therefore, in the present disclosure, the resin layer preferably includes a cured product of an addition curable silicone rubber mixture including an addition curable silicone rubber adhesive, and an ionic conducting agent including a cation having a siloxane bond in the molecule, and at least one anion selected from the group consisting of TFSI and FSI. Particularly, the resin layer is preferably a cured product of an addition curable silicone rubber mixture including an addition curable silicone rubber adhesive, and an ionic conducting agent including a cation having a siloxane bond in the molecule, and at least one anion selected from the group consisting of TFSI and FSI. Such a resin layer can be configured such that an ionic conducting agent is uniformly dispersed in the silicone rubber. Incidentally, for the preparation of the addition curable silicone rubber mixture, the ionic conducting agent including the cation including a siloxane bond in the molecule and the anion (at least one selected from the group consisting of TFSI and FSI) paired with each other therein may be mixed with an addition curable silicone rubber adhesive. Alternatively, a first ionic conducting agent including the cation and other anions than TFSI and FSI, and a second ionic conducting agent including the anion and other cations than the cation may be mixed with an addition curable silicone rubber adhesive. In this case, examples of the first ionic conducting agent may include "X-40-2750" including a cation having a siloxane bond in the molecule (trade name, manufactured by Shin-Etsu Chemical Co., Ltd.). Further, as the second ionic conducting agent, mention may be made of "FC-4400" including TFSI as an anion (trade name, manufactured by 3M Co.).

The content of the ionic conducting agent for every 100 parts by mass of the resin in the resin layer may be, for example, 0.5 to 31.0 parts by mass, and is preferably 1.0 to 30.0 parts by mass. The resin in the resin layer denotes, for example, a cured product of an addition curable silicone rubber adhesive. When the content of the ionic conducting agent falls within the foregoing range, the polarization of the resin layer can be caused with more efficiency, and the function as the adhesion layer can also be allowed to be exhibited with more reliability.

Particularly, when the content of the ionic conducting agent is 1.0 part by mass or more, the electric charge neutralization effect is more likely to be exhibited, and the electrostatic offset can be better suppressed. When the content of the ionic conducting agent is 31.0 parts by mass or less, the number of the bonds formed between the elastic layer and the resin layer increases. As a result, it is possible to more improve the release durability between the elastic layer and the resin layer.

The thickness of the resin layer may be, for example, 0.5 to 6.0 µm, is preferably 0.5 to 5.0 µm, and further preferably 1.0 to 5.0µm. When the thickness of the resin layer falls within the foregoing range, in addition to the suppression of the electrostatic offset, the durability is also improved. When the thickness of the resin layer is 0.5 µm or more, it is possible to more sufficiently combine the suppression of the electrostatic offset and the durability. When the thickness of the resin layer is 5.0 µm or less, the electric charge neutralization effect is more likely to be exhibited, so that the electrostatic offset can be more suppressed.

### Surface layer

The surface layer 41a includes, for example, a fluorocarbon resin. The surface layer 41a is preferably formed of a fluorocarbon resin. The fluorocarbon resin has no particular restriction, and a known one can be used. Examples of the fluorocarbon resin in the surface layer may include at least one selected from the group consisting of a tetrafluoroethylene-perfluoroalkyl vinyl ether copolymer (PFA), perfluoropolyether (PFPE), polytetrafluoroethylene (PTFE), and a tetrafluoroethylene-hexafluoropropylene copolymer (FEP).

The fluorocarbon resin preferably includes PFA, and is more preferably PFA. The PFA has no particular restriction, and a known one can be used. A commercially available PFA may be used. Specific examples thereof may include "TEFLON PFA 959HP-PLUS" (trade name; manufactured by Chemours-Mitsui Fluoroproducts Co., Ltd.).

The surface layer including a fluorocarbon resin has a surface resistivity of 1 × 10¹⁵ Ω/□ or more. The upper limit of the surface resistivity has no particular restriction, and is preferably, for example, 1 × 10¹⁶ Ω/□ or less.

The surface resistivity of the surface layer is preferably, for example, 1 × 10¹⁵ to 1 × 10¹⁶ Ω/□. The surface layer may be allowed to include an electron conductive agent such as carbon black on the assumption that the surface resistivity is 1 × 10¹⁵ Ω/□ or more. However, the inclusion of the electron conductive agent may cause roughening of the surface 4a-S of the surface layer. Further, non-uniformity of electric charges in the surface layer may be caused according to the dispersion state of the electron conductive agent, which may result in non-uniformity of the polarization state of the resin layer. Therefore, the surface layer in particular preferably does not include the electron conductive agent. Further, from the viewpoint of allowing the electric charge neutralization effect due to the resin layer to be better exhibited, the surface layer preferably does not include the ionic conducting agent, either.

The thickness of the surface layer 41a may be, for example, 100 µm or less, preferably 9 to 70 µm, and more preferably 10 to 50 µm. When the thickness of the surface layer 41a falls within the foregoing range, in addition to the suppression of the electrostatic offset, the durability is also improved. Particularly, when the thickness of the surface layer 41a is 10 µm or more, the durability becomes more favorable. When the thickness of the surface layer 41a is 50 µm or less, the electric charge neutralization effect due to the resin layer 41b becomes more likely to be exhibited, so that the electrostatic offset can be more suppressed.

The inner surface of the surface layer 41a is preferably subjected to a hydrophilic treatment. The inner surface of the surface layer 41a may be subjected to a sodium treatment, an excimer laser treatment, an ammonia treatment, or a plasma etching treatment. The inner surface treatment can improve the adhesion. In the present Example, a PFA tube with a thickness of 20 µm obtained by extrusion molding was used. The tube inner surface is subjected to a hydrophilic treatment by a plasma etching treatment in order to improve the wettability with an adhesive described later.

A grid part of a corona discharger is placed so as to have a gap of 10 mm with respect to the outer surface of the electrophotographic member, and then, the corona discharger is applied with an application voltage of -5 kV for 15.0 seconds. At this step, the surface potential is preferably -650 V or more where the surface potential represents the average potential of the potentials at for 14.0 to 15.0 seconds after application of the application voltage. The surface potential is more preferably -650 V to 0 V, further preferably -650 to -500 V, and furthermore preferably -620 to -550 V. The surface potential falling within the foregoing range makes the electric charge neutralization effect more likely to be exhibited, and can more suppress the electrostatic offset. The surface potential can be controlled by the amount of the ionic conducting agent, the thickness of the resin layer 41b, and the thickness of the surface layer 41a.

### Electrophotographic Image Forming Apparatus

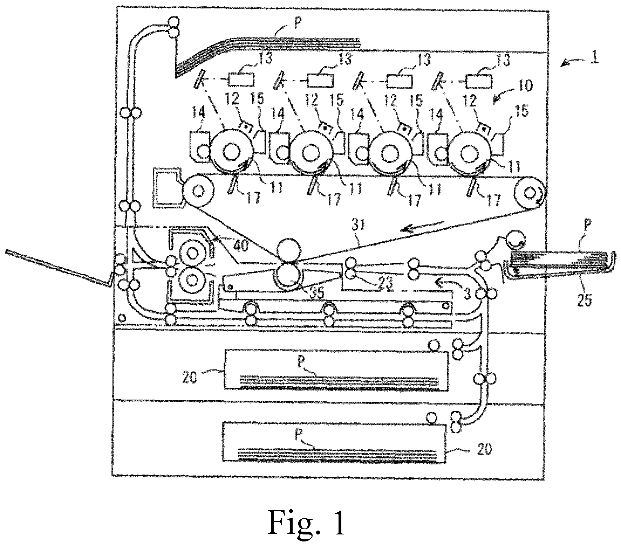

FIG. 1 is a cross sectional view of a color electrophotographic printer of one example of an electrophotographic image forming apparatus (which will be hereinafter also referred to as an "image forming apparatus") of the present embodiment, and a cross sectional view along the transport direction of the paper sheet. In the present embodiment, the color electrophotographic printer is referred to simply as a "printer".

A printer 1 shown in FIG. 1 includes an image forming part 10 of each color of Y (yellow), M (magenta), C (cyan), and Bk (black). A photosensitive drum (photosensitive member) 11 is previously charged by a charging device 12. Subsequently, the photosensitive drum 11 is exposed by a laser scanner 13, so that an electrostatic latent image is formed. The electrostatic latent image becomes a toner image by a developing device 14. The toner image of the photosensitive drum 11 is sequentially transferred to, for example, an intermediate transfer belt 31, i.e., an image bearing member by a primary transfer blade 17. After transfer, the toner left on the photosensitive drum 11 is removed by a cleaner 15. As a result of this, the surface of the photosensitive drum 11 becomes clean, and gets ready for the next image formation.

On the other hand, recording materials (paper sheet) P are fed one by one in the direction of an arrow 3 from a paper supply cassette 20 or a multi-paper supply tray 25, and are fed into a resist roller pair 23. The resist roller pair 23 once receives the recording material P, and straightens the recording material P when the recording material P goes obliquely. Then, the resist roller pair 23 feeds the recording material P into between the intermediate transfer belt 31 and a second transfer roller 35 in synchronization with the toner image on the intermediate transfer belt 31. The color toner image on the intermediate transfer belt is transferred onto the recording material P by, for example, the second transfer roller 35, i.e., a transfer member. Subsequently, the toner image on the recording material P is fixed on the recording material P by heating and pressurization by a fixing apparatus 40.

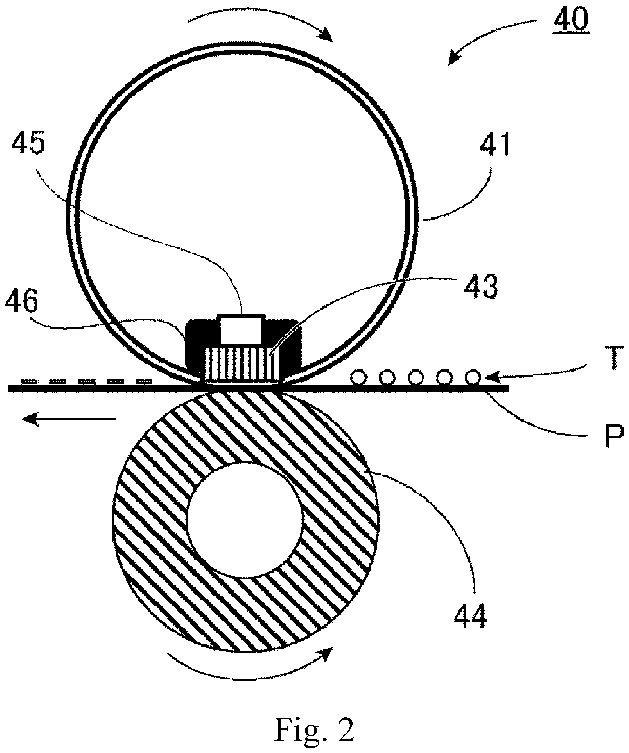

The fixing apparatus 40 includes a fixing member and a pressurizing member arranged opposed to the fixing member. FIG. 2 is a schematic block view of the fixing apparatus 40, and is an example of a film heating system heating device (tensionless type). In the present Example, such a heating device was used. However, the process can be carried out even with a roller pair system or film system heating device.

Ref. No. 43 represents a ceramic heater (which will be hereinafter described as a heater) as a heating member. The heater 43 includes a long and narrow thin sheet-shaped ceramic substrate with the direction perpendicular to the drawing as the longitudinal direction, and a current carrying heat generating resistance layer provided on the substrate surface as the basic configuration. The heater 43 is a heater with a low heat capacity which is raised in the temperature entirely with a steep rise characteristic due to the passage of a current through the heat generating resistance layer. Further, it is configured such that the current passage region is switched according to the longitudinal width size of the recording material P.

An electrophotographic member in accordance with at least one aspect of the present disclosure can be used as, for example, a fixing member. As a specific aspect of the fixing member, mention may be made of a fixing belt 41 shown in FIG. 3. The fixing belt 41 is a heat-resistant fixing member having a cylindrical shape (endless shape) as a heating member for transmitting a heat, and is loose fitted onto the support member (heater holder) including the heater 43. The fixing belt 41 has, as shown in FIG. 3, at least the surface layer 41a, the resin layer 41b, the elastic layer 41c, and the base layer 41d. Incidentally, other layers may be provided between respective layers of the base layer 41d, the resin layer 41b, the elastic layer 41c, and the surface layer 41a, and on the inner circumferential surface side of the base layer 41d, if required.

A pressure roller 44 is a heat resistant elastic pressure roller as a pressurizing member, and has a core metal, and an elastic layer including a foamed product of heat resistant rubber such as silicone rubber or fluorocarbon rubber, or silicone rubber. The both ends of the core metal are arranged in a rotatably bearing supported manner. Incidentally, an electrophotographic member in accordance with at least one aspect of the present disclosure can also be used as, for example, a pressurizing member. Namely, at least one of the fixing member and the pressurizing member is preferably the electrophotographic member. For example, the pressurizing member can have the same configuration as that of the fixing belt 41. The pressurizing member can have a 4-layer composite structure including the surface layer 41a, the resin layer 41b, the elastic layer 41c, and the base layer 41d.

On the upper side of the pressure roller 44, the fixing belt 41/heater 43 are arranged in parallel with the pressure roller 44, and are pressed by a pressing member not shown. With such a configuration, the lower surface of the heater 43 and the upper surface of the pressure roller 44 are pressure welded via the fixing belt 41 against the elasticity of the elastic layer 41c. As a result, a fixing nip part with a prescribed width can be formed as the heating part.

The pressure roller 44 is rotatively driven at a prescribed circumferential velocity in a counterclockwise direction indicated with an arrow by a driving means not shown. The pressure welding frictional force at the fixing nip part between the pressure roller 44 and the fixing belt 41 due to the rotational driving of the pressure roller 44 causes the rotatory power to act on the cylindrical fixing belt 41. As a result, the fixing belt 41 is in a driven rotational state in the clockwise direction indicated with an arrow while sliding in close contact with the lower surface of the heater 43. A support member (heater holder) 46 is also a rotational guide member of the fixing belt 41.

The pressure roller 44 is rotatively driven, accordingly, the cylindrical fixing belt 41 is rendered in a driven rotational state. Further, the heater 43 is energized, so that the heater is rapidly raised in temperature, and rises at a prescribed temperature, resulting in a temperature adjusted state. In such a state, a recording material P bearing an unfixed toner image T is introduced into between the fixing belt 41 and the pressure roller 44 at the fixing nip part. Then, the toner image bearing side surface on the recording material P comes in close contact with the outside surface of the fixing belt 41 at the fixing nip part, and is sandwiched and transported together with the fixing belt 41 to the fixing nip part. The heat of the fixing belt 41 heated by the heater 43 in the sandwiching and transporting process heats the recording material P. The unfixed toner image T on the recording material P is heated / pressed on the recording material P, to be molten and fixed. The recording material P which has passed through the fixing nip part is self-stripped from the surface of the fixing belt 41, to be discharged and transported.

A reference No. 45 represents a contact type thermometer (thermistor), and is configured to measure the temperature of the fixing belt 41 heated by the heater 43, and to pass the detection result to a temperature controlling means not shown. A reference No. 46 represents a heater holder, and a member for holding the heater 43 which has generated heat to a high temperature.

### Examples

Below, a fixing member and an image forming apparatus in accordance with the present disclosure will be described by way of examples. Incidentally, a fixing member and an image forming apparatus in accordance with the present disclosure are not limited to only the configuration embodied in the examples.

### Example 1

### Manufacturing method of electrophotographic belt

Then, a description will be given to a method for manufacturing an electrophotographic belt used in the present Example. In the present Example, an electrophotographic belt shown in FIG. 3 was manufactured by the manufacturing method including the steps 1 to 3.

### Step 1

As the base layer, a base layer having an endless belt shape made of SUS with an inside diameter of 25 mm, a width of 400 mm, and a thickness of 40 µm was prepared. On the base layer, a primer layer and an elastic layer were formed with the following procedure.

Onto the base layer, a hydrosilyl type silicone primer (trade name: DY39-051; manufactured by DOW and TORAY Co., a solution A and a solution B are mixed in equal amounts) was coated, and cured with heating at a temperature of 200°C for 5 minutes. Onto the primer layer, an addition curable liquid silicone rubber mixture including the following components (a) to (d) mixed therein was coated with a thickness of 250 µm, and cured with heating at a temperature of 200°C for 30 minutes, resulting in the formation of an elastic layer including silicone rubber with a thickness of 250 µm.

### Liquid Silicone Rubber Mixture

Component (a): linear chain type organopolysiloxane having an unsaturated aliphatic group
Component (b): organopolysiloxane having active hydrogen bonded with silicon
Component (c): a catalyst
Component (d): a thermally conductive filler

First, as the component (a), 100 parts by mass of a silicone polymer having a vinyl group, i.e., an unsaturated aliphatic group at only each opposite end of the molecular chain, and having a methyl group as a non-substituted hydrogen carbide group not including other unsaturated aliphatic groups was prepared. The silicone polymer (trade name: DMS-V35, manufactured by Gelest Co., viscosity 5000 mm²/s) will be hereinafter referred to as "Vi".

Then, to the Vi, alumina (trade name: ALUNABEADS CB-P10, manufactured by Showa Denko Co., Ltd.) was added in an amount of 370 parts by mass as the component (d), and the mixture was set in a rotation - revolution mixer (ARV-5000 manufactured by THINKY Co.,), and was mixed with stirring for two minutes at 600 rpm, resulting in a mixture 1.

Then, the one obtained by dissolving 0.2 part by mass of 1-ethynyl-1-cyclohexanol (manufactured by Tokyo Chemical Industry Co.) of a curing retardant in the same weight of toluene was added into the mixture 1, resulting in a mixture 2.

Then, as the component (c), a hydrosilylated catalyst (platinum catalyst: a mixture of 1,3-divinyl tetramethyldisiloxane platinum complex, 1,3-divinyl tetramethyldisiloxane, and 2-propanol) was added in an amount of 0.1 part by mass into the mixture 2, resulting in a mixture 3.

Further, as the component (b), a silicone polymer having a linear siloxane skeleton and having an active hydrogen group bonded with silicon only at the side chain (trade name: HMS-301, manufactured by Gelest Co, viscosity 30 mm²/s, which will be hereinafter referred to as "SiH") was weighed in an amount of 1.1 parts by mass. This was added to the mixture 3, and was sufficiently mixed, resulting in a liquid silicone rubber mixture.

The elastic layer was measured for the surface resistance with the method described in evaluation 1. As a result, the surface resistance was found to be 1×10¹⁵ Ω/□.

### Step 2

While rotating the base layer including the elastic layer formed thereon in the circumferential direction at a moving speed of 20 mm/sec, using an ultraviolet ray lamp placed at a position with a clearance of 10 mm from the surface of the elastic layer, the elastic layer surface was irradiated with an ultraviolet ray under the air atmosphere. For the ultraviolet ray lamp, a low pressure mercury ultraviolet ray lamp (trade name: GLQ500US/11, manufactured by TOSHIBA LIGHTING & TECHNOLOGY CORPORATION) was used. Thus, irradiation was performed so that the accumulated light quantity of a light with a wavelength of 185 nm at the irradiated surface became 800 mJ/cm².

### Step 3

A mixed solution obtained by mixing an ionic conducting agent (trade name: FC-4400; manufactured by 3M Japan Co., Ltd.) having the structure expressed by the following formula (1) in an amount of 0.5 part by mass for every 100 parts by mass of an addition curable silicone rubber adhesive (trade name: SE1819CV, manufactured by Toray Dow Corning Co., "solution A" and "solution B" were mixed in equal amounts) was coated onto the surface of the elastic layer so that the thickness may become the value shown in Table 2, thereby forming a coating film of the mixed solution.

(n-C₄H₉)₃(CH₃)N⁺·N⁻(SO₂CF₃)₂ (1)

On the other hand, a fluorocarbon resin (trade name: TEFLON PFA 959HP-Plus; manufactured by Chemours-Mitsui Fluoroproducts Co., Ltd.) was subjected to cylindrical extrusion molding, thereby manufacturing a fluorocarbon resin tube with a thickness of 9 µm. The inner circumferential surface of the obtained fluorocarbon resin tube was subjected to a hydrophilization treatment. Then, the fluorocarbon resin tube was put on the coating film of the mixed solution so that the inner circumferential surface of the fluorocarbon resin tube subjected to the hydrophilization treatment and the coating film of the mixed solution may come in contact with each other. Then, by uniform stripping from the top of the fluorocarbon resin tube, the surplus mixed solution was stripped from between the elastic layer and the fluorocarbon resin tube.

Then, in an electric furnace set at a temperature of 200°C, the obtained laminated body was placed, and heated for 1 hour, thereby curing the coating film of the mixed solution between the elastic layer and the fluorocarbon resin tube. As a result, the fluorocarbon resin tube was fixed onto the elastic layer. Then, both ends of the laminated body were cut, resulting in an electrophotographic belt with a width of 350 mm.

### Evaluation method

### Evaluation 1: evaluation of thickness of surface layer, surface resistivities of surface layer, resin layer, and elastic layer

First, the surface layer was isolated from the electrophotographic belt with the following methods (1) to (3).
(1) A razor was inserted into between the elastic layer and the base layer, thereby stripping the elastic layer and the surface layer from the base layer.
(2) The laminated body of the stripped elastic layer and surface layer was immersed in a silicone resolvent with a temperature of 40°C (trade name: e SOLVE 21RS; manufactured by KANEKO CHEMICAL CO.), and was placed in a water tank of an ultrasonic cleaning device (trade name: BRANSONIC (model 2510J-DTH); manufactured by Emerson Japan, Ltd.), and was applied with an ultrasonic wave for 60 minutes, thereby dissolving the elastic layer. Incidentally, the silicone resolvent includes dodecyl benzene sulfuric acid in a concentration of 10 parts by mass, and normal propyl bromide in an amount of 90 parts by mass.
(3) The surface layer was taken out from the silicone resolvent, and cleaned with water, and then, wiped out with toluene, followed by wiping out with ethanol.

The thickness of the surface layer obtained at the step (3) was measured using a micrometer (trade name: high accuracy digimatic micrometer MDH-25MB; manufactured by Mitutoyo Corporation). Incidentally, the thickness of the surface layer was measured at five arbitrary locations where the following UR-SS probe was applied using a micrometer (manufactured by Mitutoyo Corporation, high accuracy digimatic micrometer MDH-25MB), and the arithmetic average values of the values at the five points was adopted.

The surface resistivity of the surface layer was measured with the method according to Japanese Industrial Standards (JIS) K 6911; 2006. Specifically, the measurement was performed using a high resistance resistivity meter (trade name: Hiresta-UX MCP-HT800; manufactured by Nittoseiko Analytech Co., Ltd.). For the probe, a ring probe (trade name: UR-SS; manufactured by Nittoseiko Analytech Co., Ltd.) was used. For the measurement, a DC of 500 V was applied, and application was performed for 20 seconds. Then, the measurement was performed. The resulting value was referred to as the surface resistivity.

The surface resistivity of the elastic layer was measured by the following procedure.

A razor was inserted into the interface between the elastic layer and the base layer of the electrophotographic belt, thereby stripping the base layer. As a result, a sample including the elastic layer, the resin layer, and the surface layer was manufactured. At the surface of the elastic layer of the resulting sample, the surface resistivity was measured in the same manner as described above.

The surface resistivity of the resin layer was measured with the following procedure. A razor was inserted into between the elastic layer and the base layer from the surface of the electrophotographic belt for stripping, thereby manufacturing a sample. The elastic layer of the resulting sample was stripped using a razor, so that the surface of the resin layer was exposed. At the exposed surface of the resin layer, the surface resistivity was measured in the same manner as described above.

### Evaluation 2: evaluation of surface potential (charging potential)

For the charging potential measurement, first, the electric charges on the surface of the electrophotographic belt were removed. Specifically, the surface of the electrophotographic belt was wiped with a nonwoven fabric (trade name: Bemcot; manufactured by OZU CORPORATION) soaked in ethanol, thereby removing the electric charges on the surface. Hereinafter, this operation will be also referred to as "removal of electric charges on surface".

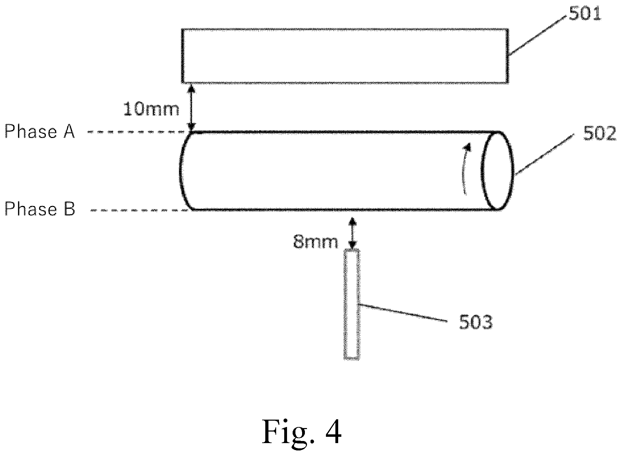

Then, while rotating the electrophotographic belt, the surface of the fixing member was charged by a corona charging device, and the charging potential was measured with a surface electrometer. First, as shown in FIG. 4, an electrophotographic belt 502 was fixed at a bearing (not shown). Then, a corona discharger grid 501 was arranged so as to achieve a gap of 10 mm with respect to the outer surface of the electrophotographic belt at a given phase (assumed as phase A) in the direction perpendicular to the axial direction of the electrophotographic belt. Then, a probe 503 of a surface electrometer was set so as to have a gap of 8 mm with respect to the central part of the electrophotographic belt at a phase rotated 180° in the circumferential direction from the phase A (assumed to be a phase B) in the direction perpendicular to the axial direction of the electrophotographic belt. In this state, the electrophotographic belt was rotated. Thus, when the surface potential in the circumferential direction of the electrophotographic belt is ±10 V or less, the measurement was started. Whereas, when the surface potential was not ±10 V or less, removal of electric charges on the surface was performed again until the surface potential became 10 V or less.

Subsequently, while rotating the electrophotographic belt at 60 rpm, the corona discharger was applied with an application voltage of -5 kV, thereby charging the surface. Thus, the measurement of the potential was performed. At this step, the potential was acquired at intervals of 0.1 second. The average potential of the surface potentials at between 14.0 to 15.0 seconds after application of -5 kV by a corona charging device was assumed to be the surface potential (charging potential).

### Evaluation 3: image evaluation

As the image forming apparatus, a full color copier (trade name: iR-ADV C3835F; manufactured by CANON Inc.) was prepared. The full color copier included the fixing apparatus shown in FIG. 2. The electrophotographic belt to be evaluated was mounted as a fixing belt at the fixing apparatus, and the following evaluation was performed. The evaluation conditions are as follows.
Test environment; room temperature 25°C, humidity 10%RH
Process speed; 150 mm/sec
Paper feeding conditions;
   (1) All the full color copier main body, and the fixing apparatus (including the fixing belt, and the pressure roller) were subjected to removal of electric charges by an ionizer.
   (2) One hundred prints were printed consecutively, each in which a white solid image was formed on one surface of a A4-sized copy paper sheet (trade name: CS-068 manufactured by CANON Inc., basis weight: 68 g) allowed to stand under the test environment for 10 days.
   (3) Subsequent to the (2), ten prints were printed consecutively, each in which a half tone image was formed on the entire each opposite surface of a A4-sized copy paper sheet (trade name: Office 70 manufactured by CANON Inc., basis weight: 70 g) allowed to stand under the test environment for 10 days.

Each half tone image formed on each opposite surface of the ten prints obtained at the (3) was visually observed for the presence or absence of a defect caused by the electrostatic offset. The results were evaluated according to the following criteria.

### Evaluation criteria

Rank S: at all the ten prints, no defects caused by toner offset were observed.
Rank A: at one of the ten prints, a defect caused by toner offset was observed.
Rank B: at 3 to 7 of the ten prints, defects caused by toner offset were observed.
Randk C: at 8 to 9 of the ten prints, defects caused by toner offset were observed.
Rank D: at all the ten prints, defects caused by toner offset were observed.

### Evaluation 4: durability evaluation

Evaluation was performed using the fixing apparatus shown in FIG. 2 including the manufactured electrophotographic belt mounted therein. The evaluation conditions are as follows.
Test environment; room temperature 25°C, humidity 50%RH
Process speed; 150 mm/sec
Paper feeding conditions;
   (1) An image forming operation of forming a grid-shaped image on a A4-sized copy paper sheet (trade name: CS-068; manufactured by CANON Inc., basis weight: 68 g, thickness: 92 µm) was performed until 800000 paper sheets were fed.
   (2) Every time when the number of paper sheets fed at the (1) reached 100000, one half tone image was formed on the entire one surface of a SRA3-sized copy paper sheet (trade name: GF-C081; manufactured by CANON Inc., basis weight: 81.4 g). Then, the resulting half tone image was visually observed for the presence or absence of a defect on the image caused by peeling at the interface between the surface layer and the elastic layer. The results were evaluated according to the following criteria.

### Evaluation criteria

Rank A: no defects were observed at the half tone images formed after the number of the paper sheets fed at the (1) reached 800000.
Rank B: defects were observed at the halftone images formed after the number of the paper sheets fed at the (1) reached 600000.
Rank C: defects were observed at the halftone images formed after the number of the paper sheets fed at the (1) reached 500000.
Rank D: defects were observed at any of the halftone images formed after the number of the paper sheets fed at the (1) reached 500000.

### Evaluation 5: measurement of thicknesses of resin layer and elastic layer

The thicknesses of the resin layer and the elastic layer were measured in the following manner. First, a measuring sample 5 mm in length, 5 mm in width and with a thickness of the total thickness of the electrophotographic belt was cut out from a given position of the electrophotographic belt. The surface of the electrophotographic belt of the resulting sample corresponding to the cross section in the thickness direction was subjected to a milling treatment for 4 hours under the conditions of a voltage of 1.5 kV, a swing angle of ±30°, and 30 reciprocations/ min using an ion milling device (trade name: IM4000; manufactured by Hitachi High-Tech Corporation), thereby cleaning the observation surface of the sample. Then, the cleaned observation surface was observed at a magnification of 100 times using a confocal microscope (trade name: H1200; manufactured by Lasertec Corporation). Calculation was performed from the average value of the measurement results of the resin layer and the elastic layer at 4 different sites of the observation surface.

### Evaluation 6: measurement of content of ionic conducting agent included in resin layer

A sample was collected from the resin layer of the electrophotographic belt. The sample was subjected to thermogravimetric analysis at 425°C under the air atmosphere using a thermogravimetric analyzer (manufactured by METTLER TOLEDO CO., TGA851).

A linear least square approximation was determined from the region where the slope becomes constant, and only the silicone rubber in the rein layer is reduced in the profile of the measurement time - mass reduction ratio obtained by the thermogravimetric analysis. The section of the linear least square approximation was calculated with ionic conducting agent content (mass%) = 100 - silicone rubber content ratio as the silicone rubber content ratio (mass%).

### Examples 2 to 10

The mixing amount of the ionic conducting agent based on the amount of the addition curable silicone rubber adhesive was set as described in Table 1. Further, the thicknesses of the surface layer and the resin layer were set as described in Table 2. Electrophotographic belts in accordance with Examples 2 to 10 were manufactured in the same manner as in Example 1 except for these. Then, each of the resulting electrophotographic belts was subjected to the evaluations 1 to 6.

### Example 11

A fixing belt was manufactured in the same manner as in Example 1, except for changing the "step 3) of Example 1 as described below.

A mixed solution (addition curable silicone rubber adhesive mixture) obtained by mixing an ionic conducting agent having a structure expressed by the following formula (1) (trade name: FC-4400; manufactured by 3M Japan Co., Ltd.) in an amount of 0.25 part by mass, and an ionic conducting agent including a cation having a siloxane bond in the molecule (trade name: X-40-2750; manufactured by Shin-Etsu Chemical Co., Ltd.) in an amount of 0.25 part by mass in every 100 parts by mass of an addition curable silicone rubber adhesive (trade name: a "solution A" and a "solution B" of SE1819CV, manufactured by Toray Dow Corning Co., are mixed in equal amounts) was coated to the surface of the elastic layer so that the thickness may become the value shown in Table 2, thereby forming a layer of the mixed solution.

(n-C₄H₉)₃(CH₃)N⁺·N⁻(SO₂CF₃)₂ (1)

### Comparative Example 1

A fixing belt was manufactured by adding a carbon particle in an amount of 1 mass% to the fluorocarbon resin tube in the method for manufacturing a fixing belt of Example 1.

### Comparative Example 2

An electrophotographic belt was manufactured in the same manner as in Example 1, except for adding carbon black (trade name: DENKA black; manufactured by DENKA COMPANY LIMITED) in an amount of 30 mass% to the elastic layer in the method for manufacturing a fixing belt of Example 1.

### Comparative Example 3

An addition curable silicone rubber adhesive obtained by not adding an ionic conducting agent but adding carbon black for the formation of a resin layer (an adhesion layer) corresponding to the resin layer in the method for manufacturing a fixing belt of Example 1 was used. Specifically, for every 100 parts by mass of an addition curable silicone rubber adhesive (trade name: SE1819CV, manufactured by DOW and TORAY CO., a "solution A" and a "solution B" being mixed in equal amounts), carbon black (trade name: DENKA black; manufactured by DENKA COMPANY LIMITED) was added in an amount of 0.5 part by mass, resulting in an adhesive in accordance with the present Comparative Example. An electrophotographic belt was manufactured in the same manner as in Example 1, except for using the adhesive for forming the adhesion layer.

### Comparative Example 4

A fixing belt was manufactured by not adding the ionic conducting agent of the step 3 in the method for manufacturing a fixing belt of Example 1.

### Comparative Example 5

An electrophotographic belt was manufactured in the same manner as in Example 1, except for changing the amount of the ionic conducting agent of Example 1 to 50.0 parts by mass at (the step 3).

Tables 1 to 3 show the thickness of each layer of each fixing belt manufactured in Examples 1 to 11, and Comparative Examples 1 to 5, the number of parts of each ionic conducting agent added, and the evaluation results of each electrophotographic belt in accordance with Examples 1 to 11, and Comparative Examples 1 to 5.

**Table 1**

| | | Conductive agent | |
|---|---|---|---|
| | | Kind (Tradename) | Number of parts added (parts by mass) |
| Example | 1 | Ionic conducting agent "FC4400" | 0.5 |
| | 2 | Ionic conducting agent "FC4400" | 1.0 |
| | 3 | Ionic conducting agent "FC4400" | 30.0 |
| | 4 | Ionic conducting agent "FC4400" | 30.5 |
| | 5 | Ionic conducting agent "FC4400" | 0.5 |
| | 6 | Ionic conducting agent "FC4400" | 0.5 |
| | 7 | Ionic conducting agent "FC4400" | 0.5 |
| | 8 | Ionic conducting agent "FC4400" | 0.5 |
| | 9 | Ionic conducting agent "FC4400" | 0.5 |
| | 10 | Ionic conducting agent "FC4400" | 0.5 |
| | 11 | Ionic conducting agent "FC4400" | 0.25 |
| | | "X-40-2750" | 0.25 |
| Comparative Example | 1 | Ionic conducting agent "FC4400" | 0.5 |
| | 2 | Ionic conducting agent "FC4400" | 0.5 |
| | 3 | Carbon black "DENKA black" | 0.5 |
| | 4 | None | 0.0 |
| | 5 | Ionic conducting agent "FC4400" | 50.0 |

**Table 2**

| | | Evaluation (1) | | | | Evaluation (2) | Evaluation (5) | | Evaluation (6) |
|---|---|---|---|---|---|---|---|---|---|
| | | Surface resistivity (Ω/□) | | | Thickness of surface layer (µm) | Residual potential (V) | Thickness (µm) | | Content of ionic conducting agent in resin layer (wt%) |
| | | Surface layer | Resin layer | Elastic layer | | | Resin layer | Elastic layer | |
| Example | 1 | 1.00E+15 | 1.00E+14 | 1.00E+14 | 9.0 | -620 | 0.5 | 250 | 0.5 |
| | 2 | 1.00E+15 | 1.00E+14 | 1.00E+14 | 9.0 | -580 | 0.5 | 250 | 1.0 |
| | 3 | 1.00E+15 | 1.00E+14 | 1.00E+14 | 9.0 | -580 | 0.5 | 250 | 30.0 |
| | 4 | 1.00E+15 | 1.00E+14 | 1.00E+14 | 9.0 | -580 | 0.5 | 250 | 30.5 |
| | 5 | 1.00E+15 | 1.00E+14 | 1.00E+14 | 9.0 | -620 | 1.0 | 250 | 0.5 |
| | 6 | 1.00E+15 | 1.00E+14 | 1.00E+14 | 9.0 | -620 | 5.0 | 250 | 0.5 |
| | 7 | 1.00E+15 | 1.00E+14 | 1.00E+14 | 9.0 | -650 | 6.0 | 250 | 0.5 |
| | 8 | 1.00E+15 | 1.00E+14 | 1.00E+14 | 10.0 | -620 | 0.5 | 250 | 0.5 |
| | 9 | 1.00E+15 | 1.00E+14 | 1.00E+14 | 50.0 | -620 | 0.5 | 250 | 0.5 |
| | 10 | 1.00E+15 | 1.00E+14 | 1.00E+14 | 51.0 | -650 | 0.5 | 250 | 0.5 |
| | 11 | 1.00E+15 | 1.00E+14 | 1.00E+14 | 9.0 | -400 | 0.5 | 250 | 0.5 |
| Comparative Example | 1 | 1.00E+14 | 1.00E+14 | 1.00E+14 | 9.0 | -580 | 0.5 | 250 | 0.5 |
| | 2 | 1.00E+15 | 1.00E+14 | 1.00E+13 | 9.0 | -580 | 0.5 | 250 | 0.5 |
| | 3 | 1.00E+15 | 1.00E+13 | 1.00E+14 | 9.0 | -750 | 0.5 | 250 | 0.5 |
| | 4 | 1.00E+15 | 1.00E+14 | 1.00E+14 | 9.0 | -750 | 0.5 | 250 | 0.0 |
| | 5 | 1.00E+15 | 1.00E+13 | 1.00E+14 | 9.0 | -540 | 0.5 | 250 | 50.0 |

In Table 2, the description such as "1E + 15" means "1 × 10¹⁵".

**Table 3**

| | | Evaluation 3 Image evaluation Evaluation rank | Evaluation 4 Durability test Evaluation rank |
|---|---|---|---|
| Example | 1 | B | B |
| | 2 | A | B |
| | 3 | A | B |
| | 4 | A | C |
| | 5 | B | A |
| | 6 | B | A |
| | 7 | C | A |
| | 8 | B | A |
| | 9 | B | A |
| | 10 | C | A |
| | 11 | S | B |
| Comparative Example | 1 | * | B |
| | 2 | * | B |
| | 3 | D | B |
| | 4 | D | B |
| | 5 | A | D |

In Table 3, "*" means that a black dot was observed in the evaluation image in the image evaluation.

When each fixing belt thus manufactured with the methods described in Examples 1 to 11 was used, the electrostatic offset could be prevented, and further, a fixing belt with high durability could be obtained. Incidentally, for Example 3 and Example 4, the surface resistivities of the resin layers were the same despite the fact that the content of the ionic conducting agent in the resin layer was set higher than the content of the ionic conducting agent in the resin layer in accordance with Example 1. The reason for this is not clear.

Then, relative to Comparative Examples 1 and 2, the reason why a black dot was observed in the evaluation image as a result of the evaluation 3 can be considered due to the following. The aggregated part of carbon black in the surface layer and the elastic layer caused generation of conductive leakage. Further, for the electrophotographic belt in accordance with Comparative Example 3, it is considered as follows. The conductivity of the adhesion layer depended upon carbon black. For this reason, polarization of electric charges in the adhesion layer was not generated. Namely, it can be considered that the electrostatic offset was generated because the electric charge neutralization effect due to polarization of the ionic conducting agent in the resin layer was not generated.

Further, also in Comparative Example 4, it can be considered as follows. The adhesion layer did not include an ionic conducting agent, and there was no electric charge neutralization effect due to the adhesion layer. For this reason, the electrostatic offset was generated.

Still further, in Comparative Example 5, the resin layer included a large amount of an ionic conducting agent. For this reason, the surface resistivity of the resin layer was lower than the surface resistivity of the resin layer in the electrophotographic belt in accordance with Example 1. For this reason, the evaluation rank of the electrostatic offset was rank "A".

However, the adhesive strength of the resin layer as the adhesion layer was low, and the surface layer was released from the elastic layer at an early stage during evaluation of the evaluation 4. For this reason, the durability test evaluation rank was rank "D".

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An electrophotographic member comprising at least a base layer, an elastic layer, and a surface layer comprising a fluorocarbon resin in this order, wherein
the elastic layer has a surface resistivity of 1 × 10¹⁴ Ω/□ or more,
the surface layer has a surface resistivity of 1 × 10¹⁵ Ω/□ or more,
the electrophotographic member further has a resin layer between the elastic layer and the surface layer,
the resin layer comprises an ionic conducting agent, and
the resin layer has a surface resistivity of 1 × 10¹⁴ Ω/□ or more.

2. The electrophotographic member according to claim 1, wherein
a surface potential is -650 V or more, where, when a grid part of a corona discharger is arranged so as to have a gap of 10 nm with respect to an outer surface of the electrophotographic member and then the corona discharger is applied with an application voltage of -5k V for 15.0 seconds, the surface potential represents an average potential of potentials at between 14.0 to 15.0 seconds after application of the application voltage.

3. The electrophotographic member according to claim 1 or 2, wherein
a content of the ionic conducting agent is 1.0 to 30.0 parts by mass for every 100 parts by mass of a resin in the resin layer.

4. The electrophotographic member according to any one of claims 1 to 3, wherein
a thickness of the resin layer is 0.5 to 5.0 µm.

5. The electrophotographic member according to any one of claims 1 to 4, wherein
a thickness of the surface layer is 10 to 50 µm.

6. The electrophotographic member according to any one of claims 1 to 5, wherein
the fluorocarbon resin comprises a tetrafluoroethylene-perfluoroalkyl vinyl ether copolymer.

7. The electrophotographic member according to any one of claims 1 to 6, wherein
the elastic layer comprises a cured product of an addition curable liquid silicone rubber mixture.

8. The electrophotographic member according to any one of claims 1 to 7, wherein
the resin layer is a cured product of an addition curable silicone rubber adhesive mixture comprising the ionic conducting agent and an addition curable silicone rubber adhesive.

9. The electrophotographic member according to claim 8, wherein
the ionic conducting agent comprises a cation having a siloxane bond in a molecule, and comprises at least one anion selected from the group consisting of TFSI and FSI.

10. The electrophotographic member according to any one of claims 1 to 9, wherein
the surface layer does not comprise an electron conductive agent or an ionic conducting agent.

11. The electrophotographic member according to any one of claims 1 to 10, wherein
the electrophotographic member is an electrophotographic belt having an endless shape.

12. The electrophotographic member according to claim 11, wherein
the electrophotographic member is a fixing belt.

13. A fixing apparatus, comprising:
a fixing member; and a pressurizing member arranged opposed to the fixing member, wherein
at least one of the fixing member and the pressurizing member is the electrophotographic member according to any one of claims 1 to 12.

14. An electrophotographic image forming apparatus comprising a fixing apparatus, wherein
the fixing apparatus includes a fixing member, and a pressurizing member arranged opposed to the fixing member, and
at least one of the fixing member and the pressurizing member is the electrophotographic member according to any one of claims 1 to 12.
